# EUROPEAN PATENT SPECIFICATION

(11) **EP 3 145 992 B1**
(45) Date of publication and mention of the grant of the patent: **27.01.2021**
(21) Application number: 15724239.7
(22) Date of filing: 18.05.2015
(51) Int. Cl.: C08L 27/06, C08L 33/06, C08L 51/06, C08L 23/06, C08L 23/08

(54) **POLYVINYLCHLORIDE/POLYOLEFIN COMPOSITION**
KOMPATIBILISIERUNG EINER POLYVINYLCHLORID-/POLYOLEFINZUSAMMENSETZUNG DURCH IN-SITU EPOXY-CARBOXYLGRUPPEN REAKTION
COMPATIBILISATION D'UNE COMPOSITION POLYOLÉFINE/ POLYCHLORURE DE VINYLE PAR RÉACTION EPOXY-GROUPES CARBOXYLIQUES IN SITU

(30) Priority: 23.05.2014 EP 14169558
(43) Date of publication of application: 29.03.2017
(73) Proprietor: SABIC Global Technologies B.V., 4612 PX Bergen op Zoom (NL)
(72) Inventor: MOKDAD, Abdulhamid, Riyadh 11422 (SA); AL-SHEHRI, Abdulhadi, Riyadh 11422 (SA); ZERFA, Mohammed, Riyadh 11422 (SA)
(74) Representative: Sabic Intellectual Property Group
(86) International application number: PCT/EP2015/060887
(87) International publication number: WO 2015/177087

(56) References cited:
- EP-A1- 0 285 824
- DATABASE WPI Week 199416 Thomson Scientific, London, GB; AN 1994-132147 XP002732819, -& JP H06 80835 A (KANEGAFUCHI KAGAKU KOGYO KK) 22 March 1994 (1994-03-22) cited in the application
- DATABASE WPI Week 199414 Thomson Scientific, London, GB; AN 1994-115307 XP002732820, -& JP H06 65437 A (KANEKA CORP) 8 March 1994 (1994-03-08) cited in the application
- KOKLAS S N ET AL: "Compatibilization of chlorinated polyethylene/poly(vinyl chloride) blends with epoxidized natural rubber", POLYMER, ELSEVIER SCIENCE PUBLISHERS B.V, GB, vol. 32, no. 1, 1 January 1991 (1991-01-01), pages 66-72, XP024117776, ISSN: 0032-3861, DOI: 10.1016/0032-3861(91)90563-X [retrieved on 1991-01-01]
- PARMER J F ET AL: "MISCIBILITY OF POLY(METHACRYLATE:/POLY(VINYL CHLORIDE) BLENDS", MACROMOLECULES, AMERICAN CHEMICAL SOCIETY, WASHINGTON, DC, UNITED STATES, vol. 22, no. 3, 1 March 1989 (1989-03-01), pages 1078-1083, XP000127365, ISSN: 0024-9297, DOI: 10.1021/MA00193A014
- Cor Koning ET AL: "Strategies for compatibilization of polymer blends", Progress in Polymer Science, 1 January 1998 (1998-01-01), pages 707-757, XP055604779, DOI: 10.1016/S0079-6700(97)00054-3 Retrieved from the Internet: URL:https://orbi.uliege.be/bitstream/2268/ 4370/1/Koning_C_1998_Prog%20polym%20sc_%20 23_4_707.pdf [retrieved on 2019-07-11]

## Description

The invention is directed to a composition, and to an article made from said composition. More in particular, the invention relates to a composition comprising a compatibilised blend of polyvinylchloride and polyolefin.

Due to the shortage of crude oil and environment considerations, the polymer fabrication industry is paying increasing attention to the possibility of recycling polymer wastes. The key problem to be solved before processes for recycled products become economic is the inferior mechanical properties of polymer blends formed from the common thermoplastics. Among them, polyvinyl chloride (PVC) and polyolefins (POs, including polyethylene, PE, and polypropylene, PP) have the largest scale fabrication and application. Blends of polyvinylchloride and polyolefins possess very poor mechanical properties because of their poor miscibility and for this reason, the study of polyvinylchloride/polyolefin blends is of interest in both industrial and academic fields.

Due to difficulties in compatibilising these blends this has not led to commercially available systems containing high concentrations of the two major components. Polyvinylchloride/polyolefin blends do not compatibilise satisfactorily because of the poor adhesion of the phases due to the thermodynamic incompatibility.

In the prior art compatibilisers have been suggested.

EP0285824 discloses a polyblend chiefly of polyvinylchloride and a minor amount of polyolefin, which polyblend is compatibilized with co-compatibilizers, the first compatbilizer being chlorinated polyethylene and the second being a graft copolymer of a polyolefin. This reference does not disclose an in-situ reaction between the co-compatibilizers to reinforce the interface.

JP19920233257 discloses a composition incorporating a total of 100 pts.wt. of a base resin composed of (A) 1-99 pts.wt. of vinyl chloride-based resin and/or styrene-based resin and (B) 99-1 pts.wt. of an olefin resin with (C) 0-50 pts.wt. of a compatibilizer for compatibilizing the component A with the component B, (D) 0.1-50 pts.wt. of a graft copolymer obtained by graft polymerization of (d-1) 5-10 pts.wt. of a combination of (1) 0.01-50wt.% of an epoxy group-bearing vinyl compound and (2) 50-99.99wt.% of another vinyl compound to (d-2) 40-95 pts.wt. of a rubbery polymer and (E) 1-200 pts.wt. of a heat resistance improver obtained by copolymerization between (e-1) 0.01-50wt.% of an epoxy group-bearing vinyl compound and (e-2) 50-99.99wt.% of another vinyl compound.

JP19920220459 discloses a composition obtained by blending 100 pts.wt. total amount composed of (A) 1-99 pts.wt. vinyl chloride-based resin and(or) styrenic resin and (B) 99-1 pt.wt. olefinic resin such as PP with (C) 0-50 pts.wt. compatibilizing agent for the components (A) and (B), and (D) 1-200 pts.wt. heat resistance improver comprising a copolymer composed of (i) 0.01-50wt.% vinyl compound having epoxy group and (ii) 50-99.99wt.% other copolymerizable vinyl compounds.

In the prior art, various methods have also been suggested for the reactive compatibilisation of such immiscible blends for demanding applications. The mechanical properties and the technical performance of the immiscible blends would be more nearly additive if the interfacial zone is strengthened. One way to do this is to add interfacially active agents to the immiscible mixture. Thus, the interfacial energy between the immiscible phases is reduced ensuring a finer dispersion upon mixing and higher stability against phase separation.

Paul et al. (Polym. Eng. Sci. 1973, 13(3), 202-208) showed some improvement in mechanical properties when chlorinated polyethylene was used as a compatibiliser additive. This effect was said to derive from the graded molecular structure acquired during chlorination. In a related study, Locke et al. (Polym. Eng. Sci. 1973, 13(4), 308-318) concluded that the interaction of chlorinated polyethylene with polyethylene derives from compatibility of rather long methylene sequences in chlorinated polyethylene with the polyethylene which results in good adhesive bonding. The interaction of chlorinated polyethylene with polyvinylchloride was attributed to good mutual adhesion between similar polar materials. They also reported that the addition of chlorinated polyethylene to polyvinylchloride/polyethylene blends is accompanied by a decrease in component domain size.

While the use of chlorinated polyethylene as a compatibiliser for polyvinylchloride/polyethylene blends considerably reduces the surface tension between the two polymers, this reduction is unfortunately not sufficient to create a tangible compatibilisation. Although the domains of the two polymers are reduced in size, the interface forces are relatively weak and prevent further significant improvements in mechanical properties.

Another approach focused on adding a crosslinking agent to the blend. Nakamura et al. (J. Mater. Sci. 1986, 21(12), 4485-4488), for instance, disclosed addition of peroxide to a polyvinylchloride/polyethylene blend to give a co-crosslinked blend with a uniform dispersion of small polyethylene particles and with an improved mechanical properties.

Despite these prior art efforts, there remains a need for blends of polyvinylchloride and polyolefins having improved mechanical properties.

An objective of the invention is to address this need in the art and overcome one or more of the disadvantages faced in the prior art approaches.

The inventors found that this objective can, at least in part, be met by providing a blend of polyvinylchloride and polyolefin, wherein said blend is compatibilised with a specific copolymer.

Accordingly, in a first aspect the invention is directed to a composition comprising a polymer blend as defined in claim 1.

The inventors surprisingly found that in the composition of the invention the interfaces forces are reinforced through an *in situ* reaction between epoxy and carboxyl groups. As a result, both the mixing and the mechanical properties improve considerably. Without wishing to be bound by any theory, it is believed that the considerably improvement in mechanical properties is a result of an increase of the interaction forces at the interfaces between the polyolefin and the polyvinylchloride.

The term "polyvinylchloride" as used in this application is meant to refer to both homopolymers of polyvinylchloride as well as co- and ter-polymers of vinyl chloride with comonomers such as vinyl acetate, vinyl formate, alkyl vinyl ethers, ethylene, propylene, butylenes, vinylidene chloride, alkyl acrylates and alkyl methacrylates, alkyl maleates, alkyl fumarates, and the like. Preferably at least 80 %, more preferably at least 90 %, and even more preferably 100 % of the monomers to be polymerized will be vinyl chloride monomer. These resins typically have a number average molecular weight of 35 000-120 000 g/mol (as determined by ASTM D5296-97), preferably 45 000-75 000 g/mol. Inherent viscosity (as measured by ASTM D1243-60; Method A) will generally be in the range of 0.5-1.5, preferably in the range of 0.7-1.2. The method of preparation of these resins is not critical and, for example, any of the well known suspension techniques may be employed.

The term "polyolefin" is well known to the skilled person and generally refers to a class of homopolymers or copolymers produced from one or more olefins (also called an alkene with the general formula CnH2n) as a monomer. It is preferred in accordance with the invention that the polyolefin is a homopolymer of olefin or a copolymer of two or more olefins. More preferably, the polyolefin is a homopolymer of olefin. Thus, within the family of polyolefins, various polyethylene homopolymers and copolymers can be used, as well as polypropylene homopolymers and copolymers and high melt strength polypropylenes constructed through polymerisation or irradiation techniques. For example, polyethylene homopolymers can include (but are not limited to) low density polyethylene (LDPE) and high density polyethylene (HDPE). Although strictly speaking not polyolefins, for the purpose of the present invention copolymers of ethylene and vinyl acetate (EVA), and copolymers of ethylene and vinyl alcohol (EVOH)are also considered as polyolefins. Ethylene/a-olefin copolymers are copolymers of ethylene with one or more comonomers selected from C₃-C₂₀ α-olefins, such as 1-butene, 1-pentene, 1-hexene, 1-octene, methyl pentene, and the like, including linear low density polyethylene (LLDPE), linear medium density polyethylene (MDPE), very low density polyethylene (VLDPE), and ultra low density polyethylene (ULDPE). In some embodiments, suitable polyolefins can be derived from petroleum-based resources and/or emerging bio-based resources.

Polyolefins such as polyethylenes are commonly differentiated based on the density which results from their numbers of chain branches per 1000 carbon atoms in the polyethylene main chain in the molecular structure. Branches typically are C₃-C₈ olefins, and which are preferably butene, hexene or octene. For example, HDPE has very low numbers of short chain branches (less than 20 per 1000 carbon atoms), resulting in a relatively high density, *i.e.* a density of 0.94-0.97 gm/cc. LLDPE has more short chain branches, in the range of 20-60 per 1000 carbon atoms with a density of 0.91-0.93 gm/cc. LDPE with a density of 0.91-0.93 gm/cc has long chain branches (20-40 per 1000 carbon atoms) instead of short chain branches in LLDPE and HDPE. ULDPE has a higher concentration of short chain branches than LLDPE and HDPE, *i.e.* in the range of 80-250 per 1000 carbon atoms and has a density of 0.88-0.91 gm/cc.

Illustrative copolymer and terpolymers include copolymers and terpolymers of α-olefins with other olefins such as ethylene-propylene copolymers; ethylene-butene copolymers; ethylene-pentene copolymers; and ethylene-hexene copolymers. The above polyolefins may be obtained by any known process. The polyolefin may have a number average molecular weight of 1000-1 000 000 g/mol (as determined by ASTM D 6474-99), and preferably 10 000-500 000 g/mol. Preferred polyolefins are polyethylene, polypropylene, polybutylene and copolymers, and blends thereof. The most preferred polyolefin is polyethylene.

The composition of the invention comprises a blend of polyvinylchloride and polyolefin that is modified to have one or more carboxyl groups (*i.e.* -COOH). Such modified polyolefins are commercially available. More in particular, the polyolefin that is modified to have one or more carboxyl groups suitably refers to those polymers obtained by modifying polyolefins with unsaturated carboxylic acids such as acrylic acid, methacrylic acid, maleic acid, fumaric acid, maleic anhydride, itaconic anhydride, *etc.* Such modified polyolefins can, for instance be obtained by a process of adding an unsaturated carboxylic acid (such as up to 5 mol%, preferably 0.5-2 mol%) and a slight quantity of an organic peroxide to a polyolefin, followed by melt-kneading the mixture by means of an extruder. These modifications are well-known in the art. Further, various polyolefins modified to have one or more carboxyl groups are commercially available. Some examples of commercially available modified polyolefins include Polybond® 1001, Polybond® 1002 and Polybond® 1009 (all available from Addivant).

In a preferred embodiment, the polyolefin modified to have one or more carboxyl groups is a modified polyethylene and/or modified polypropylene, preferably a modified high density polyethylene and/or modified polypropylene.

In addition to the polyvinylchloride and the polyolefin modified to have one or more carboxyl groups, the composition of the invention further comprises a copolymer containing one or more moieties that are miscible with polyvinylchloride and one or more epoxy groups. This copolymer acts as a compatibiliser for the otherwise immiscible mixture of polyvinylchloride and polyolefin.

The copolymer contains one or more moieties that are miscible with polyvinyl chloride and that are selected from the group consisting of methyl acrylate, methyl methacrylate, ethyl acrylate, ethyl methacrylate, glycidyl acrylate and glycidyl methacrylate. A preferred example of such a moiety is a polymethylmethacrylate.

Further, the copolymer also contains one or more epoxy groups. Typically, such epoxy groups can be introduced into the copolymer by polymerising in the presence of epoxy group-containing monomers. For example the epoxy group may be introduced in the form of a glycidyl acrylate or a glycidyl methacrylate group.

In the composition of the invention one or more carboxyl groups of the modified polyolefin react *in situ* with one or more epoxy groups of the copolymer. Hence, in an embodiment one or more of the epoxy groups on the copolymer have undergone a ring-opening reaction with one or more carboxylic groups on the modified polyolefin. This reaction ensures phases interactions reinforcements

More preferably, the copolymer comprise one or more monomers selected from methyl methacrylate, glycidyl methacrylate, ethyl acrylate. Even more preferably, the copolymer is a copolymer of methyl methacrylate, glycidyl methacrylate and ethyl acrylate.

In a preferred embodiment, the copolymer is a copolymer of methyl methacrylate, glycidyl methacrylate and ethyl acrylate, and the methyl methacrylate is present in an amount of 60-85 wt.% based on total weight of the copolymer, the glycidyl methacrylate is present in an amount of at least 10 wt.% based on total weight of the copolymer, and the ethyl acrylate is present in an amount of 1-5 wt.% based on total weight of the copolymer.

The relative amounts of the components in the composition of the invention can vary. Preferably, however, the polyvinylchloride is the major component in the blend and forms a matrix, in which domains of the polyolefin are compatibilised by the copolymer.

An example of a preferred blend of the invention comprises:
(A) 40-85 wt.% based on total weight of the blend of said polyvinylchloride;
(B) 3-15 wt.% based on total weight of the blend of said polyolefin modified to have one or more carboxyl groups; and
(C) 3-15 wt.% based on total weight of the blend of said copolymer.

A more preferred example of a blend of the invention comprises:
(A) 45-80 wt.% based on total weight of the blend of said polyvinylchloride;
(B) 4-12 wt.% based on total weight of the blend of said polyolefin modified to have one or more carboxyl groups; and
(C) 4-12 wt.% based on total weight of the blend of said copolymer.

An even more preferred example of a blend of the invention comprises:
(A) 50-75 wt.% based on total weight of the blend of said polyvinylchloride;
(B) 5-10 wt.% based on total weight of the blend of said polyolefin modified to have one or more carboxyl groups; and
(C) 5-10 wt.% based on total weight of the blend of said copolymer.

The blend of the invention can further comprise a polyolefin (D). Preferably such polyolefin is present in an amount of 5-35 wt.% based on total weight of the blend, more preferably 10-30 wt.%, even more preferably 15-25 wt.%.

Preferably, the polyolefin (D) is selected from a polyethylene and/or polypropylene, more preferably high density polyethylene, and/or polypropylene.

The blend of the invention further comprises a chlorinated polyolefin (E). The presence of such a chlorinated polyolefin further improves the mechanical properties of the composition, in particular elongation to break. It is believed that this improvement is the result of a reduction of the surface tension between polyvinylchloride and polyolefin caused by the chlorinated polyolefin. The inventors found that the presence of a chlorinated polyolefin works synergistically with the improvement in mechanical properties by the copolymer compatibiliser. Preferably, such chlorinated polyolefin is present in an amount of 3-15 wt.% based on total weight of the blend of said copolymer, more preferably 4-12 wt.%, even more preferably 5-10 wt.%. Chlorinated polyolefins are commercially available, such as Tyrin™ BH 9000 which is available from Dow Chemical.

Preferably, the chlorinated polyolefin (E) is selected from a chlorinated polyethylene and/or chlorinated polypropylene. More preferably, the chlorinated polyolefin (E) is a chlorinated polyethylene.

Apart from the blend, the composition of the invention can further comprise one or more additives (such as from 0.0001-20 wt.%, based on total weight of the composition). Such additives can, for example, include plasticisers, stabilisers including viscosity stabilisers and hydrolytic stabilisers, antioxidants, ultraviolet ray absorbers, anti-static agents, dyes, pigments or other colouring agents, inorganic fillers, fire-retardants, lubricants, reinforcing agents such as glass fibre and flakes, foaming or blowing agents, processing aids, anti-block agents, release agents, fusion aid, process aid, calcium carbonate, calcium stearate, titanium dioxide, stearic acid, paraffin wax, or combinations of two or more thereof.

Compositions can be produced by any methods known to the person skilled in the art such as standard mixing practices. This can be accomplished in a one-step or a multi-step process.

The composition of the invention allows the fabrication of articles with improved mechanical properties. The composition can be formed in to shaped articles using methods such as injection moulding, compression moulding, overmoulding, or extrusion. Optionally, formed articles can be further processed. For example, pellets, slugs, rods, ropes, sheets and moulded articles of the invention may be prepared and used for feedstock for subsequent operations, such as thermoforming operations, in which the article is subjected to heat, pressure and/or other mechanical forces to produce shaped articles.

In a further aspect, the invention is directed to an article made from the composition of the invention.

The article of the invention can have an advantageous elongation at break of 10 % or more, such as in the range of 10-45 %, preferably in the range of 20-45 %, more preferably in the range of 25-45 % as measured in accordance with ISO 527.

The article of the invention can further have an advantageous tensile strength of 20 MPa or more, such as in the range of 20-40 MPa, or in the range of 22-35 MPa as measured in accordance with ISO 527.

The article of the invention can desirably achieve a combination of high elongation at break and at the same time a high tensile strength. The high elongation at break is induced by the polyolefin component while the high tensile strength is induced by the polyvinylchloride component.

The article of the invention may be in the form of a compact and foamed extruded sheet. The article of the invention can be used, for instance, in house doors, kitchen cabinets, and furniture articles (tables, chairs and the like). The article of the invention may also be used in electrical ducts, corrugated pipes or sewage pipes. The pipes may be core-shell pipes with a foamed core and a compact shell.

The invention will now be further illustrated by means of the following examples, which are not intended to limit the scope of protection in any manner.

### Examples

Copolymers of methyl methacrylate (MMA), glycidyl methacrylate (GMA) and ethyl acrylate (EA) (MMA/GMA/EA) of different properties were selected to create the *in situ* reaction that compatibilises the PVC/PE blends through the epoxy groups that are on the glycidyl methacrylate part of the copolymer.

### Blends preparation

Polybond® 1009 obtained from Addivant (a high density polyethylene to which carboxylic groups were grafted; in pellet form; melt flow rate (190/2.16): 5-6 g/10 min according to ASTM D-1238; density at 23 °C: 0.95 g/cm³; acrylic acid level 6 wt.%; melting point: 127 °C as measured by Differential Scanning Calorimetry), was mixed with SABIC® LLDPE 118N (a butane-linear low density polyethylene resin; melt flow rate (190/2.16): 1.0 g/10 min according to ISO 1133; density according to ISO 1183(A) 918 kg/m³; melding point: 121 °C as measured by Differential Scanning Calorimetry) and extruded in pellets form using a Brabender twin screw extruder and the following processing conditions.
T₁ = 170 °C
T₂ = 180 °C
T₃ = 180 °C
T_{d} = 175 °C
Screw speed: 12 rpm
Melt temperature: 185 °C - 188 °C

The acrylic copolymers, containing the MMA segments which are miscible with PVC, were mixed with the PVC compound and pelletised using a Brabender twin screw extruder and the following processing conditions.
T₁ = 150 °C
T₂ = 165 °C
T₃ = 175 °C
T_{d} = 175 °C
Screw speed: 12 rpm
Melt temperature: 178 °C - 182 °C

The compounds obtained from the mixing of Polybond® 1009 with LLDPE 118N were mixed with the compounds obtained from the mixing of MMA/GMA/EA copolymers with PVC in a manner to obtain blends that contain 70 wt.% of PVC and 30 wt.% of PE. The different blends prepared are shown in table 1.

**Table 1: PVC/PE (70/30) containing different proportions of chlorinated polyethylene, Polybond® 1009 and MMA/GMA/EA copolymers**

| Material | Comp. Blend A (wt.%) | Comp. Blend B (wt.%) | Comp. Blend 1 (wt.%) | Inv. Blend 2 (wt.%) | Inv. Blend 3 (wt.%) | Inv. Blend 4 (wt.%) | Inv. Blend 5 (wt.%) |
|---|---|---|---|---|---|---|---|
| PVC | 70 | 63.7 | 57.4 | 54.0 | 51.1 | 51.1 | 44.8 |
| PE | 30 | 27.3 | 24.6 | 23.0 | 21.9 | 21.9 | 19.2 |
| MMA/GMA/EA (83/15/2) | - | - | 9.0 | 6.9 | - | - | - |
| MMA/GMA/EA (73/25/2) | - | - | - | - | 9.0 | - | 9.0 |
| MMA/GMA/EA | - | - | - | - | - | 9.0 | - |
| Polybond® 1009 | - | - | 9.0 | 6.9 | 9.0 | 9.0 | 9.0 |
| CPE Tyrin BH 9000 ^{a)} | - | 9.0 | - | 9.0 | 9.0 | 9.0 | 9.0 |

| | | | | | | | |
|---|---|---|---|---|---|---|---|
| ^{a)} CPE Tyrin™ BH 9000 is a chlorinated polyethylene obtainable from Dow Chemical | | | | | | | |

ZSK extruder (co-rotating twin screw extruder L/D = 26,
D = 30 mm) having the ability to generate high shear that helps to reduce the size of the dispersed phase for the polymer blends, was used to prepare the blends of table 1 under the following processing conditions:
Temperature zone 1: 150 °C
Temperature zone 2: 175 °C
Temperature zone 3: 170 °C
Temperature zone 4: 180 °C
Adaptor zone: 180 °C
Temperature die: 160 °C
Melt temperature: 184 °C
Water temperature: 30 °C
Screw speed: 70 rpm
Melt pressure: 2940 atm
Cutter speed: 700 rpm

### Blends performance evaluation

The blends performance was evaluated through their mechanical properties (tensile strength and impact strength) and their morphology behaviour. The blend samples used for testing were injection moulded using a Battenfield injection moulding machine under the following conditions.

| Parameters | Condition 1 | Condition 2 |
|---|---|---|
| Temperature zone 1 | 150 °C | 145 °C |
| Temperature zone 2 | 165 °C | 155 °C |
| Temperature zone 3 | 175 °C | 165 °C |
| Nozzle temperature: | 176 °C | 170 °c |
| Oil temperature: | 40 °C | 40 °C |
| Mould temperature: | 20 °C | 20 °C |
| Clamp force: | 1000 kN | 1000 kN |
| Injection pressure: | 5.52 MPa | 5.52 MPa |
| Holding pressure: | 5.52 MPa | 5.52 MPa |
| Cooling time: | 4s | 4s |
| Holding time: | 8s | 8s |
| Injection time: | 8s | 8s |
| Ejection time: | 1s | 1s |
| Total cycle time: | 23.6 s | 23.6 s |
| Melt temperature: | 190 °C | 180 °C |

From table 2 that summarises the mechanical properties of the different characterised blends, it is clearly seen that the blends for which the *in situ* reaction between the acrylic based copolymer and the carboxylic based polyethylene were used, are performing better. Further improvement is achieved when also chlorinated polyethylene is used in the blend. The considerable improvement of the elongation at break in the presence of both the chlorinated polyethylene and the *in situ* reaction between the acrylic based copolymer and the carboxylic based polyethylene is attributed to a synergistic effect of the reduction of the size of the polyethylene domains (attributed to the reduction of the surface tension between polyvinylchloride and polyethylene caused by chlorinated polyethylene) and the increase of the interaction forces at the interfaces between the polyethylene domains and the polyvinylchloride matrix.

**Table 2: Mechanical properties of PVC/PE (70/30) blends**

| | Tensile strength (MPa) | Impact strength (J/m) | Elongation at break (%) |
|---|---|---|---|
| Comp. Blend A | 11.4 ± 0.4 | 20.5 ± 1.2 | 2.55 ± 0.35 |
| Comp. Blend B | 18.5 ± 0.6 | 67.0 ± 9.8 | 3.8 ± 0.4 |
| Blend 1 (Comp.) | 32.4 ± 0.2 | 59.7 ± 16.1 | 12.1 ± 1.7 |
| Inv. Blend 2 | 24.4 ± 0.8 | 88.9 ± 30.0 | 41.3 ± 8.3 |
| Inv. Blend 3 | 25.4 ± 0.7 | 64.4 ± 9.2 | 40.5 ± 7.1 |
| Inv. Blend 4 | 23.7 ± 0.2 | 50.0 ± 3.9 | 41.0 ± 7.2 |
| Inv. Blend 5 | 27.5 ± 0.4 | 65.8 ± 19.5 | 29.5 ± 6.6 |

## Claims

1. Composition comprising a blend of
(A) polyvinylchloride;
(B) polyolefin modified to have one or more carboxyl groups;
(C) a copolymer containing one or more moieties that are miscible with polyvinylchloride and one or more epoxy groups;
wherein said copolymer comprises one or more monomers selected from the group consisting of methyl acrylate, methyl methacrylate, ethyl acrylate, ethyl methacrylate, glycidyl acrylate, and glycidyl methacrylate;
(D) polyolefin; and
(E) chlorinated polyolefin.

2. Composition according to claim 1, wherein said polyolefin modified to have one or more carboxyl groups is a modified polyethylene and/or modified polypropylene, preferably a modified high density polyethylene and/or modified polypropylene.

3. Composition according to any one of claims 1-2, wherein said one or more moieties that are miscible with polyvinylchloride comprises a polymethylmethacrylate moiety.

4. Composition according to any one of claims 1-3, wherein one or more of said epoxy groups on the copolymer have undergone a ring opening reaction with one or more carboxylic groups on the modified polyolefin.

5. Composition according to any one of claims 1-4, wherein said composition comprises a blend of
(A) 40-85 wt.% based on total weight of the blend of said polyvinylchloride, preferably 45-80 wt.%, more preferably 50-75 wt.%;
(B) 3-15 wt.% based on total weight of the blend of said polyolefin modified to have one or more carboxyl groups, preferably 4-12 wt.%, more preferably 5-10 wt.%; and
(C) 3-15 wt.% based on total weight of the blend of said copolymer, preferably 4-12 wt.%, more preferably 5-10 wt.%.

6. Composition according to any one of claims 1-5, wherein said blend comprises
(D) polyolefin, in an amount of 5-35 wt.% based on total weight of the blend, more preferably 10-30 wt.%, even more preferably 15-25 wt.%.

7. Composition according to claim 6, wherein said polyolefin (D) is a polyethylene and/or polypropylene, preferably high density polyethylene, and/or polypropylene.

8. Composition according to any one of claims 1-7, wherein said blend further comprises
(E) chlorinated polyolefin in an amount of 3-15 wt.% based on total weight of the blend of said copolymer, preferably 4-12 wt.%, more preferably 5-10 wt.%.

9. Composition according to claim 8, wherein said chlorinated polyolefin (E) is a chlorinated polyethylene and/or chlorinated polypropylene.

10. Composition according to any one of claims 1-9, wherein said copolymer comprises one or more monomers selected from methyl methacrylate, glycidyl methacrylate, ethyl acrylate, preferably the copolymer is a copolymer of methyl methacrylate, glycidyl methacrylate and ethyl acrylate.

11. Composition according to claim 10, wherein said copolymer is a copolymer of methyl methacrylate, glycidyl methacrylate and ethyl acrylate, wherein said methyl methacrylate is present in an amount of 60-85 wt.% based on total weight of said copolymer, wherein said glycidyl methacrylate is present in an amount of at least 10 wt.% based on total weight of said copolymer, and wherein said ethyl acrylate is present in an amount of 1-5 wt.% based on total weight of said copolymer.

12. Article made from a composition according to any one of claims 1-11, such as by injection moulding wherein at least part of the carboxyl groups of modified polyolefin (B) have reacted with at least part of the epoxy groups of the epoxy groups of copolymer (C).

13. Article according to claim 12, having an elongation at break of 10 % or more, such as in the range of 10-45 %, preferably in the range of 20-45 %, more preferably in the range of 25-45 % as measured in accordance with ISO 527.

14. Article according to one or more of claims 12-13, having a tensile strength of 20 MPa or more, such as in the range of 20-40 MPa, or in the range of 22-35 MPa as measured in accordance with ISO 527.

## Patentansprüche

1. Zusammensetzung enthaltend ein Gemisch aus
(A) Polyvinylchlorid;
(B) Polyolefin, das modifiziert ist, um eine oder mehrere Carboxylgruppen aufzuweisen;
(C) ein Copolymer, das eine oder mehrere Gruppierungen, die mit Polyvinylchlorid mischbar sind, und eine oder mehrere Epoxygruppen enthält;
wobei das Copolymer ein oder mehrere Monomere umfasst, ausgewählt aus der Gruppe bestehend aus Methylacrylat, Methylmethacrylat, Ethylacrylat, Ethylmethacrylat, Glycidylacrylat und Glycidylmethacrylat;
(D) Polyolefin; und
(E) chloriertem Polyolefin.

2. Zusammensetzung nach Anspruch 1, wobei das Polyolefin, das modifiziert ist, um eine oder mehrere Carboxylgruppen aufzuweisen, ein modifiziertes Polyethylen und/oder modifiziertes Polypropylen ist, vorzugsweise ein modifiziertes Polyethylen hoher Dichte und/oder modifiziertes Polypropylen.

3. Zusammensetzung nach einem der Ansprüche 1-2, wobei die eine oder die mehreren Gruppierungen, die mit Polyvinylchlorid mischbar sind, eine Polymethylmethacrylat-Gruppierung umfassen.

4. Zusammensetzung nach einem der Ansprüche 1 bis 3, wobei eine oder mehrere der Epoxygruppen an dem Copolymer einer Ringöffnungsreaktion mit einer oder mehreren Carboxylgruppen an dem modifizierten Polyolefin unterzogen wurden.

5. Zusammensetzung nach einem der Ansprüche 1-4, die Zusammensetzung umfassend ein Gemisch aus
(A) 40-85 Gewichtsprozent, bezogen auf das Gesamtgewicht des Gemischs, des Polyvinylchlorids, vorzugsweise 45-80 Gewichtsprozent, bevorzugter 50-75 Gewichtsprozent;
(B) 3-15 Gewichtsprozent, bezogen auf das Gesamtgewicht des Gemischs, des Polyolefins, das modifiziert ist, um eine oder mehrere Carboxylgruppen aufzuweisen, vorzugsweise 4-12 Gewichtsprozent, bevorzugter 5-10 Gewichtsprozent; und
(C) 3-15 Gewichtsprozent, bezogen auf das Gesamtgewicht des Gemischs des Copolymers, vorzugsweise 4-12 Gewichtsprozent, bevorzugter 5-10 Gewichtsprozent.

6. Zusammensetzung nach einem der Ansprüche 1-5, wobei das Gemisch Folgendes umfasst
(D) Polyolefin, in einer Menge von 5-35 Gewichtsprozent, bezogen auf das Gesamtgewicht des Gemischs, bevorzugter 10-30 Gewichtsprozent, noch bevorzugter 15-25 Gewichtsprozent.

7. Zusammensetzung nach Anspruch 6, wobei das Polyolefin (D) ein Polyethylen und/oder Polypropylen, vorzugsweise Polyethylen hoher Dichte, und/oder Polypropylen ist.

8. Zusammensetzung nach einem der Ansprüche 1-7, wobei das Gemisch ferner Folgendes umfasst
(E) chloriertes Polyolefin in einer Menge von 3-15 Gewichtsprozent, bezogen auf das Gesamtgewicht des Gemischs des Copolymers, vorzugsweise 4-12 Gewichtsprozent, bevorzugter 5-10 Gewichtsprozent.

9. Zusammensetzung nach Anspruch 8, wobei das chlorierte Polyolefin (E) ein chloriertes Polyethylen und/oder chloriertes Polypropylen ist.

10. Zusammensetzung nach einem der Ansprüche 1-9, wobei das Copolymer ein oder mehrere Monomere, ausgewählt aus Methylmethacrylat, Glycidylmethacrylat, Ethylacrylat, umfasst, vorzugsweise das Copolymer ein Copolymer aus Methylmethacrylat, Glycidylmethacrylat und Ethylacrylat ist.

11. Zusammensetzung nach Anspruch 10, wobei das Copolymer ein Copolymer aus Methylmethacrylat, Glycidylmethacrylat und Ethylacrylat ist, wobei das Methylmethacrylat in einer Menge von 60-85 Gewichtsprozent, bezogen auf das Gesamtgewicht des Copolymers, vorhanden ist, wobei das Glycidylmethacrylat in einer Menge von mindestens 10 Gewichtsprozent, bezogen auf das Gesamtgewicht des Copolymers, vorhanden ist, und wobei das Ethylacrylat in einer Menge von 1-5 Gewichtsprozent, bezogen auf das Gesamtgewicht des Copolymers, vorhanden ist.

12. Gegenstand, hergestellt aus einer Zusammensetzung nach einem der Ansprüche 1 bis 11, wie beispielsweise durch Spritzgießen, wobei mindestens ein Teil der Carboxylgruppen von modifiziertem Polyolefin (B) mit mindestens einem Teil der Epoxygruppen von Copolymers (C) reagiert haben.

13. Gegenstandnach Anspruch 12, der eine Bruchdehnung von 10 % oder mehr, wie beispielsweise in dem Bereich von 10-45 %, vorzugsweise in dem Bereich von 20-45 %, bevorzugter in dem Bereich von 25-45 %, gemessen nach ISO 527 aufweist.

14. Gegenstand nach einem oder mehreren der Ansprüche 12-13, der eine Zugfestigkeit von 20 MPa oder mehr, wie beispielsweise in dem Bereich von 20-40 MPa oder in dem Bereich von 22-35 MPa, gemessen nach ISO 527 aufweist.

## Revendications

1. Composition comprenant un mélange de
(A) polychlorure de vinyle ;
(B) polyoléfine modifiée pour avoir au moins un groupe carboxyle ;
(C) un copolymère contenant au moins un fragment qui est miscible avec le polychlorure de vinyle et au moins un groupe époxy ;
ledit copolymère comprenant au moins un monomère choisi dans le groupe constitué par l'acrylate de méthyle, le méthacrylate de méthyle, l'acrylate d'éthyle, le méthacrylate d'éthyle, l'acrylate de glycidyle, et le méthacrylate de glycidyle ;
(D) polyoléfine ; et
(E) polyoléfine chlorée.

2. Composition selon la revendication 1, dans laquelle ladite polyoléfine modifiée pour avoir au moins un groupe carboxyle est un polyéthylène modifié et/ou un polypropylène modifié, de préférence un polyéthylène haute densité modifié et/ou un polypropylène modifié.

3. Composition selon l'une quelconque des revendications 1 à 2, dans laquelle ledit au moins un fragment qui est miscible avec le polychlorure de vinyle comprend un fragment polyméthacrylate de méthyle.

4. Composition selon l'une quelconque des revendications 1 à 3, dans laquelle ledit au moins un groupe époxy sur le copolymère a subi une réaction d'ouverture de cycle avec au moins un groupe carboxylique sur la polyoléfine modifiée.

5. Composition selon l'une quelconque des revendications 1 à 4, dans laquelle ladite composition comprend un mélange de
(A) 40 à 85 % en poids sur la base du poids total du mélange dudit polychlorure de vinyle, de préférence 45 à 80 % en poids, de manière davantage préférée 50 à 75 % en poids ;
(B) 3 à 15 % en poids sur la base du poids total du mélange de ladite polyoléfine modifiée pour avoir au moins un groupe carboxyle, de préférence 4 à 12 % en poids, de manière davantage préférée 5 à 10 % en poids ; et
(C) 3 à 15 % en poids sur la base du poids total du mélange dudit copolymère, de préférence 4 à 12 % en poids, de manière davantage préférée 5 à 10 % en poids.

6. Composition selon l'une quelconque des revendications 1 à 5, dans laquelle ledit mélange comprend
(D) une polyoléfine, dans une quantité de 5 à 35 % en poids sur la base du poids total du mélange, de manière davantage préférée 10 à 30 % en poids, de manière encore plus préférée 15 à 25 % en poids.

7. Composition selon la revendication 6, dans laquelle ladite polyoléfine (D) est un polyéthylène et/ou un polypropylène, de préférence un polyéthylène haute densité, et/ou un polypropylène.

8. Composition selon l'une quelconque des revendications 1 à 7, dans laquelle ledit mélange comprend en outre
(E) une polyoléfine chlorée dans une quantité de 3 à 15 % en poids sur la base du poids total du mélange dudit copolymère, de préférence de 4 à 12 % en poids, de manière davantage préférée de 5 à 10 % en poids.

9. Composition selon la revendication 8, dans laquelle ladite polyoléfine chlorée (E) est un polyéthylène chloré et/ou un polypropylène chloré.

10. Composition selon l'une quelconque des revendications 1 à 9, dans laquelle ledit copolymère comprend au moins un monomère choisi parmi le méthacrylate de méthyle, le méthacrylate de glycidyle, l'acrylate d'éthyle, de préférence le copolymère est un copolymère de méthacrylate de méthyle, de méthacrylate de glycidyle et d'acrylate d'éthyle.

11. Composition selon la revendication 10, dans laquelle ledit copolymère est un copolymère de méthacrylate de méthyle, de méthacrylate de glycidyle et d'acrylate d'éthyle, dans lequel ledit méthacrylate de méthyle est présent dans une quantité de 60 à 85 % en poids sur la base du poids total dudit copolymère, dans laquelle ledit méthacrylate de glycidyle est présent dans une quantité d'au moins 10 % en poids sur la base du poids total dudit copolymère, et dans laquelle ledit acrylate d'éthyle est présent dans une quantité de 1 à 5 % en poids sur la base du poids total dudit copolymère.

12. Article fabriqué à partir d'une composition selon l'une quelconque des revendications 1 à 11, tel que par moulage par injection dans lequel au moins une partie des groupes carboxyle de la polyoléfine modifiée (B) ont réagi avec au moins une partie des groupes époxy des groupes époxy du copolymère (C).

13. Article selon la revendication 12, ayant un allongement à la rupture de 10 % ou plus, tel que dans la plage de 10 à 45 %, de préférence dans la plage de 20 à 45 %, de manière davantage préférée dans la plage de 25 à 45 %, mesuré en conformité avec ISO 527.

14. Article selon au moins l'une des revendications 12 à 13, ayant une résistance à la traction de 20 MPa ou plus, telle que dans la plage de 20 à 40 MPa, ou dans la plage de 22 à 35 MPa, mesurée en conformité avec ISO 527.
